# EUROPÄISCHE PATENTSCHRIFT

(11) **EP 0 642 414 B1**
(45) Veröffentlichungstag und Bekanntmachung des Hinweises auf die Patenterteilung: **20.03.1996**
(21) Anmeldenummer: 93909886.9
(22) Anmeldetag: 04.05.1993
(51) Int. Cl.: B32B 15/08, B32B 27/20, C09D 5/08, C08K 3/22

(54) **ANORGANISCHE OXIDE ENTHALTENDER METALL-KUNSTSTOFFOLIE-VERBUND, VERFAHREN ZU DESSEN HERSTELLUNG SOWIE DESSEN VERWENDUNG ZUR HERSTELLUNG VON KONSERVENDOSEN**
INORGANIC OXIDE-CONTAINING METAL-PLASTIC FILM COMPOSITE MATERIAL, PROCESS FOR PRODUCING THE SAME AND ITS USE FOR PRODUCING PRESERVE CANS
MATERIAU COMPOSITE CONSTITUE D'UN FILM PLASTIQUE ET DE METAL CONTENANT DES OXYDES INORGANIQUES, SON PROCEDE DE PRODUCTION ET SON UTILISATION DANS LA PRODUCTION DE BOITES DE CONSERVES

(30) Priorität: 29.05.1992 DE 4217796
(43) Veröffentlichungstag der Anmeldung: 15.03.1995
(73) Patentinhaber: BASF Lacke + Farben AG, D-48165 Münster-Hiltrup (DE)
(72) Erfinder: KRAUSE, Siegfried, D-48165 Münster (DE); KIRIAZIS, Leonidas, D-48151 Münster (DE)
(86) Internationale Anmeldenummer: EP9301079
(87) Internationale Veröffentlichungsnummer: WO9324318

(56) Entgegenhaltungen:
- EP-A- 0 482 577
- CH-A- 486 508
- DE-A- 2 950 994
- DE-A- 3 044 942
- GB-A- 2 101 109
- US-A- 4 615 918
- US-A- 4 681 816
- POLYMER PAINT COL. JOURNAL vol.179, Nr. 4243, Seiten 127 - 129 J. BOXAL 'DEVELOPMENTS IN PIGMENTS FOR ANTI-CORROSION COATINGS'
- DATABASE WPI Derwent Publications Ltd., London, GB; & JP,A,56 131 671

## Beschreibung

Die vorliegende Erfindung betrifft anorganische Oxide enthaltende Metall-Kunststoffolie-Verbunde, Verfahren zur Herstellung dieser Verbunde sowie deren Verwendung zur Herstellung von Konservendosen.

Zur Herstellung einer Dose oder eines Verschlusses für den Einsatz als Verpackungsmaterial, insbesondere für die Verpackung von Lebensmitteln, werden Bleche aus Weißblech, chromatiertem Stahl, wie ECCS (electrolytic chromium-coated steel) und Aluminium in Tafel- oder Bandform beschichtet. Die Lackschicht wirkt als Schutzschicht, um das Metall vor dem Angriff des Füllgutes und daraus resultierender Korrosion einerseits zu schützen und um andererseits eine Beeinflussung des Füllgutes durch Korrosionsprodukte des Metalles zu verhindern. Selbstverständlich darf es auch durch die Lackschicht selbst, etwa durch herausgelöste Lackbestandteile, zu keiner Beeinflussung bzw. Beeinträchtigung des Füllgutes kommen, weder bei der im Anschluß an die Abfüllung durchgeführte Sterilisierung des Füllgutes noch bei der anschließenden Lagerung der verpackten Güter, insbesondere Lebensmittel.

Weiterhin müssen die Lacke derart aufgebaut sein, daß sie den bei der Weiterverarbeitung der beschichteten Blechen zu Dosen oder Verschlüssen auftretenden mechanischen Beanspruchungen, etwa beim Verformen, Stanzen, Bördeln, Sicken u.ä. standhalten.

Als vorteilhaftes Verfahren für die Beschichtung von Blechen, die insbesondere zur Herstellung von Lebensmittelverpackungen eingesetzt werden, hat sich die Folienbeschichtung von Metallblechen erwiesen. So ist beispielsweise in der DE-OS 3 128 641 ein Verfahren zur Herstellung von Laminaten für Lebensmittelverpackungen beschrieben, bei dem das Metallblech und ein thermoplastischer Harzfilm zusammen mit einem zwischen diesen Schichten angeordneten Klebstoff auf Basis eines carboxylgruppenhaltigen Polyolefins auf Temperaturen oberhalb des Schmelzpunktes des Klebstoffes aufgeheizt und dann unter Anwendung von Druck zusammen abgekühlt werden, wodurch der Metall-Kunststoff-Verbund hergestellt wird.

Weiterhin sind auch aus der DE-OS 2 912 023, der GB-A-2027391 und der EP-B-31701 Laminate und aus diesen Laminaten hergestellte Lebensmittelverpackungsbehälter bekannt.

Aus der EP-A-4633 sind durch Coextrusion hergestellte und biaxial gestreckte Kunstoffolien bekannt, die aus einer Trägerfolie und mindestens einer Heißsiegelschicht bestehen. Die opaken Folien enthalten fein verteilte, feste Teilchen in einer Menge von 1 bis 25 Gew.-%, bezogen auf das Gewicht des Polymeren. Durch den Gehalt, an Füllstoffen und durch das biaxiale Strecken entstehen Mikrohohlräume, da beim Streckvorgang die Polymermatrix an den Korngrenzen der mit dem Kunststoff unverträglichen Füllstoffe aufgerissen wird.

Diese Mikrohohlräume führen zu einem opaken Aussehen der Kunststoffolien Metall-Kunststoffolie-Verbunde werden in der EP-A-4633 nicht beschrieben.

Die EP-A-199 228 betrifft Verbundfolien, die zwei mit Klebstoff verbundene Kunststoffolien enthalten, wobei mindestens einer der beiden Filme an seiner Innenfläche mit einer Metallschicht versehen ist und wobei einer der beiden Kunststoffilme ein opakes Aussehen hat durch Mikrohohlräume im Film, die durch anorganische Füllstoffe, wie Sulfate, Carbonate, Silicate, Oxide gebildet werden. Diese werden in einem Anteil von 5 bis 30 Gew.-%, bezogen auf das Gesamtgewicht der Mischung von Kunststoff und Füllstoff, verwendet. Die Verbundfolie wird empfohlen zur Verpackung von oxidationsempfindlichen Lebens- und Genußmitteln. Der opake Kunststoffilm, der im wesentlichen aus Kunststoff als Hauptkomponente und Füllstoff besteht, muß biaxial gestreckt werden. Der transparente Kunststoffilm wird ebenfalls bevorzugt gestreckt. Gemäß der EP-A-199 228 muß der opake Kunststoffilm zwingend biaxial gestreckt werden, die als Deckschichten verwendeten transparenten Kunststoffilme werden vorzugsweise biaxial gestreckt. Die biaxiale Streckung ist jedoch nachteilig, da sie mit einem zusätzlichen aufwendigen Arbeitsvorgang verbunden ist und maschinelle Vorrichtungen zur Durchführung der biaxialen Orientierung erforderlich sind.

Die aus der EP-A-199 228 bekannten metallisierten Verbundfolien haben gute Barriereeigenschaften, d.h. eine geringe Licht-, Wasserdampf-, Gasdurchlässigkeit und eine gute Aroma- und Riechstoff-Dichtheit. Diese Barriere-Eigenschaften sind zurückzuführen auf die anorganischen Füllstoffe und auf die entstehenden Mikrohohlräume, die als Barriere für Licht und Gase wirken. Bei den Verbundsystemen handelt es sich um metallisierte Verbundfolien mit einer Metallstärke von 20 bis 1000 nm. Es handelt sich dabei also um flexible Verbundsysteme, die z.B. zur Herstellung von Keks- und Schokoladeverpackungen geeignet sind. Zur Herstellung von Konservendosen sind die aus der EP-A-199 228 bekannten metallisierten Verbundfolie aufgrund der geringen Metallschichtdicke nicht geeignet.

Bei Konservendosen auf Basis eisen- und zinnhaltiger Metallbleche, die aus Metall-Kunststoffolie-Verbunden gestanzt und nach Befüllung sterilisiert werden, tritt das Problem auf, daß an der Dose deutliche Korrosionserscheinungen und Marmorierungserscheinungen, die vermutlich auf Eisensulfidbildung oder Zinnsulfidbildung zurückzuführen sind, auftreten. Diese Korrosions- und Marmorierungserscheinungen äußern sich in einer Dunkelfärbung der Konservendosen. Da Kunststoffolien insbesondere in nicht-biaxial-gestrecktem Zustand eine gewisse Gas- und damit auch Sulfiddurchlässigkeit aufweisen, kommt es bei der Sterilisation zu unerwünschten Metallsulfidbildungen an der Konservendose.

Die der vorliegenden Erfindung zugrunde liegende Aufgabe bestand daher darin, Metall-Kunststoffolie-Verbunde zur Herstellung von Konservendosen zur Verfügung zu stellen, die hervorragende Barriere-Eigenschaften, d.h. eine geringe Gasdurchlässigkeit und insbesondere eine geringe Sulfiddurchlässigkeit aufweisen, ohne daß die Kunststoffolien zwingend biaxial gestreckt werden müssen.

Die aus den Metall-Kunststoffolie-Verbunden hergestellten Konservendosen sollten keine Korrosions- und Marmorierungserscheinungen aufweisen und zur Verpackung empfindlicher Güter, wie z.B. Fleischwaren, Gemüse und Fertiggerichten, geeignet sein. Als Metallbleche sollten insbesondere eisen- und zinnhaltige Bleche geeignet sein, wie beispielsweise Bleche aus Schwarzblech, Weißblech und ECCS (electrolytic chromimium-coated steel).

Die der Erfindung zugrunde liegende Aufgabe wird überraschenderweise gelost durch einen anorganische Oxide enthaltenden Metall-Kunststoffolie-Verbund. Dieser ist dadurch gekennzeichnet, daß 0,1 bis 8 Gew.-%, vorzugsweise 0,5 bis 8 Gew.-%, bezogen auf das Gesamtgewicht des thermoplastischen Kunststoffs der Kunststoffolie und der anorganischen Oxide, eines Pulvers, bestehend aus Zinkoxid und/oder Manganoxid, in der Kunststoffolie und/oder in der zwischen dem Metall und der Kunststoffolie angeordneten Haftvermittlerschicht bzw. Klebeschicht eingearbeitet sind und das Metall des Verbundes eine Stärke von mindestens 0,08 mm aufweist.

Die erfindungsgemäßen Verbunde werden hergestellt, indem ein thermoplastischer Kunststoff mit dem Zinkoxidpulver und/oder dem Manganoxidpulver vermischt wird, zusammen mit einem Haftvermittler coextrudiert wird und die hergestellte Kunststoffolie auf ein Metallblech kaschiert wird und/oder ein thermoplastischer Kunststoff mit einer Mischung aus Haftvermittler und Zinkoxidpulver und/oder Manganoxidpulver coextrudiert wird und die hergestellte Kunststoffolie auf ein Metallblech kaschiert wird oder indem das Zinkoxidpulver und/oder Manganoxidpulver in einen lösemittelhaltigen oder wäßrigen Klebstoff eingearbeitet wird, der Klebstoff auf ein erhitztes Metallblech appliziert wird und eine thermoplastische Kunststoffolie auf das Metallblech kaschiert wird. Weiterhin ist es möglich, aus einer Mischung von thermoplastichem Kunststoff und Zinkoxidpulver und/oder Manganoxidpulver eine Kunststoffolie zu extrudieren, die mittels eines lösemittelhaltigen oder wäßrigen Klebstoffes, welcher ggf. auch Zinkoxid- und/oder Manganoxidpulver enthalten kann, auf ein Metallblech appliziert wird. Erfindungsgemäß können also das Zinkoxidpulver und das Manganoxidpulver in die Kunststoffolie, in den als Haftvermittler wirkenden Kunststoff, der zusammen mit dem thermoplastischen Kunststoff extrudiert wird, oder in die zwischen dem Metallblech und der Kunststoffolie angeordneten Klebeschicht eingearbeitet sein.

Die Kunststoffolien werden durch Extrusion thermoplastischer Kunststoffe hergestellt. Die Extrusion von thermoplastischen Kunststoffen ist ein wohlbekanntes Verfahren, so daß an dieser Stelle nicht näher darauf eingegangen zu werden braucht.

Es ist vorteilhaft, das anorganische Pulver durch Seitenbeschickung des Extruders in die Kunststoffschmelze einzuführen. Vorzugsweise werden Doppelschneckenextruder verwendet. Es ist bevorzugt, eine mehrstufige Extrusion zur Herstellung der Kunststoffolien durchzuführen, wobei in der ersten Extrusionsstufe das anorganische Pulver zusammen mit einem Teil des Kunststoffs unter Herstellung einer Folie mit einem hohen Füllstoffgehalt extrudiert wird und in einer zweiten Stufe das aus der Folie erhaltene Granulat mit weiterem thermoplastischem Pulver extrudiert wird. Auf diese Weise wird eine bessere Homogenisierung der Mischung aus Kunststoff und Füllstoff erreicht.

Die erfindungsgemäß verwendeten thermoplastischen Kunststoffe umfassen Polyolefine, Polyamide, Polyester, Polyvinylchlorid, Polyvinylidenchlorid, Polyurethane und Polycarbonate jeweils in Form einer Folie oder eines Films. Sie umfassen auch zusammengesetzte Folien und Filme (Verbundfolie und -filme), die beispielsweise erhalten werden durch gemeinsames Extrudieren von mindestens zwei der obengenannten Polymeren. Die bevorzugte thermoplastische Folie oder der bevorzugte thermoplastische Film umfaßt bevorzugt eine Folie oder einen Film aus einem Polyolefin, Polyester oder Polyamid. Derartige Folien und Filme sind bekannt und in einer Vielzahl auf dem Markt erhältlich.

Derartige Polyolefinfolien werden nach bekannten Verfahren (Blasverfahren, Chill-roll-Verfahren etc.) aus Granulaten von Homopolymeren des Ethylens und Propylens sowie Copolymeren gefertigt. Zu nennen sind Polyethylen niedriger Dichte (PE-LD), mittlerer Dichte (PE-MD), hoher Dichte (PE-HD), linear low und linear very low density Polyethylen (PE-LLD, PE-VLD), weiterhin Polypropylen-Copolymerisate, die im allgemeinen aus 92 bis 99 Gew.-% Propylen und 1 bis 8 Gew.-%, bezogen auf das Monomerengesamtgewicht, Comonomeren erhalten werden. Geeignete Comonomere sind andere C₂- bis C₁₂-α-Monoolefine, vorzugsweise C₂- bis C₆-α-Monoolefine, wie Ethylen, Buten-1, 4-Methylpenten-1, Hexen-1, n-Okten-1, n-Decen-1 und n-Dodecen-1. Geeignete Polypropylene sowie Verfahren zu ihrer Herstellung sind beispielsweise beschrieben in der DE-A-37 30 022.

Weitere geeignete thermoplastische Kunststoffe, aus denen die Kunststoffolien der erfindungsgemäßen Metall-Kunststoffolie-Verbunde hergestellt werden können, sind Copolymerisate des Ethylens, beispielsweise mit Comonomeren aus der Gruppe der Vinylester, Vinylalkylether, ungesättigten Mono- und Dicarbonsäuren, deren Salzen, Anhydriden und Estern.

Die Polyolefin-Kunststoffe sind beispielsweise unter den folgenden Markennamen im Handel erhältlich:

Escorene®, Lupolen®, Lotader®, Lacqtene®, Orevac®, Lucalen®, Dowlex®, Primacor®, Surlyn®, Admer®, Novolen®, Sclair®, Stamylan® u.a.

Beispiele für das thermoplastische Kunststoffe geeignete Polyamide sind Polyamid 6 (Polyamid, hergestellt aus ε-Aminocapronsäure), Polyamid 6,6 (Polyamid, hergestellt aus Hexamethylendiamin und Sebacinsäure), Polyamid 66,6 (Mischpolyamid, das aus Polyamid 6 und Polyamid 6,6 besteht), Polyamid 11 (Polyamid, hergestellt aus ω-Aminoundecansäure) und Polyamid 12 (Polyamid, hergestellt aus ω-Aminolaurinsäure oder aus Lauryllactam). Beispiele für Handelsprodukte sind Grilon®, Sniamid® und Ultramid®.

Bevorzugt eingesetzte Polyester sind Polyethylenterephthalat, Polybutylenterephthalat. Geeignet sind aber auch andere Polyester auf Basis von Terephthalsäure, Isophthalsäure und Phthalsäure und verschiedener Polyole, wie z.B. Polyethylenglykol und Polytetramethylenglykole unterschiedlichen Polymerisationgrades.

Beispiele für geeignete Handelsprodukte sind Hostaphan®, Melinex®, Hostadur® und Ultradur®.

Ein Beispiel für ein geeignetes Handelsprodukt auf Polyurethanbasis ist Elastolan® der Firma BASF AG.

Bevorzugt werden Kunststoffolien eingesetzt, die erhalten werden durch Extrusion von statistischem Polypropylen-Copolymerisat, besonders bevorzugt von Polypropylencopolymerisat aus 1 bis 4 Gew.-% Ethylen und 96 bis 99 Gew.-% Propylen, jeweils bezogen auf das Gesamtgewicht der Monomerenzusammensetzung.

Die Dicke der thermoplastischen Kunststoffolien beträgt im allgemeinen 15 bis 200 µm, vorzugsweise 20 bis 100 µm.

Die erfindungsgemäßen Metall-Kunststoffolie-Verbunde enthalten 0,1 bis 8 Gew.-%, bevorzugt 0,5 bis 8 Gew.-%, bezogen auf das Gesamtgewicht des thermoplastischen Kunststoffs der Kunststoffolie und der anorganischen Oxide, Zinkoxidpulver und/oder Manganoxidpulver. Bevorzugt werden die genannten Pulver in einem Anteil von 2 bis 4 Gew.-%, wobei besonders bevorzugt Zinkoxidpulver in einem Anteil von 2 bis 4 Gew.-% in die Kunststoffolie des Metall-Kunststoffolie-Verbundes eingearbeitet wird, verwendet.

Gemäß der vorliegenden Erfindung enthalten die Metall-Kunststoffolie-Verbunde 0,1 bis 8 Gew.-%, bezogen auf das Gesamtgewicht des zur Herstellung der Kunststoffolie verwendeten Kunststoffs und des Zinkoxids und/oder Manganoxids, eines Pulvers, bestehend aus Zinkoxid und/oder Manganoxid. Bevorzugt werden die oxidischen Pulver dabei in einem Anteil von 0,5 bis 8 Gew.-%, bezogen auf das Gesamtgewicht des Kunststoffs der Kunststoffolie und des oxidischen Pulvers, verwendet. Zinkoxid- und Manganoxidpulver sind in einer Vielzahl auf dem Markt erhältlich. Als Zinkoxidpulver kommen beispielsweise das unter der Handelsbezeichnung "Zinkoxyd aktiv" erhältliche Produkt der Firma Bayer AG sowie das unter der Handelsbezeichnung "Zinkoxid Harzsiegel NT/S" der Firma Heubach infrage.

Besonders bevorzugt liegt die mittlere Teilchengröße des Zinkoxidpulvers und des Manganoxidpulvers im Bereich von 0,1 bis 10 µm. Dabei hängt die Teilchengröße des verwendeten oxidischen Pulvers selbstverständlich ab von der Dicke der Schicht, in die das Pulver eingearbeitet ist.

Die oxidischen Pulver können gemäß der vorliegenden Erfindung in der thermoplastischen Kunststoffolie des Metall-Kunststoffolie-Verbundes eingearbeitet sein. In diesem Fall wird eine Mischung aus dem thermoplastischen Kunststoff und des Zinkoxidpulvers und/oder Manganoxidpulvers zusammen mit weiteren Additiven, wie Gleitmitteln, Stabilisatoren, Farbstoffen, Pigmenten, Antistatika, Antiblockmitteln und dergleichen zu einer Kunststoffolie extrudiert, wobei diese dann mit Hilfe eines wäßrigen oder lösemittelhaltigen Klebstoffes oder eines coextrudierten Haftvermittlers auf ein Metallblech laminiert wird.

Die Kunststoffolien der erfindungsgemäßen Metall-Kunststoffolie-Verbunde können zweckmäßigerweise Additive, wie Gleitmittel, Stabilisatoren, Farbstoffe, Pigmente, Antistatika, Antiblockmittel und dergleichen in jeweils wirksamer Menge enthalten. Die Additive werden in den für die Herstellung, Verarbeitung, Konfektionierung und Anwendung notwendigen Mengen in Form von Pulver, Puder, Perlen oder einem direkt in dem Polymer eingearbeiteten Konzentrat eingesetzt. Nähere Angaben zu den üblicherweise eingesetzten Mengen und Beispiele für geeignete Additive sind beispielsweise dem Gächter-Müller, Kunststoffadditive, Carl-Hanser-Verlag zu entnehmen.

Die zuvor genannten Additive können selbstverständlicherweise auch in die Haftvermittlerschicht eingearbeitet werden.

Als Haftvermittler können sowohl Copolymere, Terpolymere, Pfropfcopolymere und Ionomere sein mit der Maßgabe, daß sie Carboxyl- oder Anhydridgruppen oder Gruppen, die zu Carboxylgruppen hydrolisierbar sind, aufweisen und daß der Schmelzindex der Polymeren, gemessen bei 190°C und einer Belastung von 2,16 kg zwischen 0,1 und 30 g/10 min., bevorzugt zwischen 0,2 und 25 g/10 min, und besonders bevorzugt zwischen 0,5 und 20 g/10 min. liegt.

Geeignete Co- bzw. Terpolymere sind herstellbar durch Copolymerisation von Ethylen mit α,β-ungesättigten Carbonsäuren, wie z.B. Acrylsäure, Methacrylsäure, Itaconsäure, Crotonsäure, Isocrotonsäure, Maleinsäure und Fumarsäure, den entsprechenden Anhydriden oder den entsprechenden Estern oder Halbestern mit 1 bis 8 C-Atomen im Alkoholrest, wie z.B. die Methyl-, Ethyl-, Propyl-, Butyl-, Pentyl-, Hexyl-, Cyclohexyl-, Heptyl-, Octyl- und 2-Ethylhexylester der aufgeführten Säuren. Ebenfalls einsetzbar sind auch die entsprechenden Salze der aufgeführten Carbonsäuren, etwa die Natrium-, Kalium-, Lithium-, Magnesium-, Calcium-, Zink- und Ammoniumsalze. Bevorzugt eingesetzt werden die Carbonsäuren und ihre Anhydride.

Weiterhin können bei der Copolymerisation noch weitere, mit Ethylen und den ungesättigten Carbonylverbindungen copolymerisierbare Monomere eingesetzt werden. Geeignet sind beispielsweise Alphaolefine mit 3 bis 10 C-Atomen, Vinylacetat und Vinylpropionat.

Die Mengen der eingesetzten Monomeren werden dabei so gewählt, daß das entsprechende Polymer einen Carboxylgruppengehalt von 0,1 bis 30 Gew.-%, bevorzugt 2 bis 20 Gew.-%, aufweist und daß der Gehalt an Ethyleneinheiten im Polymer bis zu 99,9 Gew.-%, bevorzugt zwischen 75 und 95 Gew.-%, beträgt.

Geeignete Propfcopolymere sind herstellbar durch Pfropfung von mindestens einem Polymeren aus der Gruppe der Polyolefine mit bis zu 10 Gew.-%, bevorzugt bis zu 5 Gew.-%, bezogen auf das Gesamtgewicht der Monomeren, mindestens eines Monmeren aus der Gruppe der α,β-ungesättigten Carbonsäuren, deren Anhydriden, deren Estern oder Salzen in Gegenwart oder Abwesenheit von Peroxiden. Beispiele von geeigneten Polyolefinen sind die bereits bei der Beschreibung der Kunststoffe für die Kunststoffolien dieser Beschreibung aufgeführten Polyolefine. Beispiele für geeignete Carbonylverbindungen sind die oben bei der Beschreibung der Haftvermittler auf Copolymerbasis aufgeführten Carbonylverbindungen.

Die als Haftvermittlerschicht eingesetzten Ionomeren sind herstellbar durch die bereits oben beschriebene Copolymerisation von Ethylen und ggf. weiteren Monomeren mit Salzen α,β-ungesättigter Carbonsäuren oder durch partielle Neutralisation von den bereits oben beschriebenen carbonsäurehaltigen Co-, Ter- und Prfopfpolymeren mit Salzen, Oxiden und Hydroxiden von Natrium, Kalium, Lithium, Magnesium, Calcium, Zink und Ammonium. Die Neutralisation kann in der Schmelze oder in Lösung durchgeführt werden. Die Mengen an basischer Verbindung wird dabei so gewählt, daß der Neutralisationsgrad des Polymers zwischen 0,1 und 99 %, bevorzugt zwischen 0,1 und 75 %, und ganz besonders bevorzugt zwischen 0,1 und 40 % liegt.

Es kommen auch Haftvermittler auf Polyurethanbasis infrage.

Gemäß der vorliegenden Erfindung können die oxidischen Pulver auch in die Haftvermittlerschicht eingearbeitet werden, wobei zur Herstellung der Laminate zunächst eine Mischung des Haftvermittler-Kunststoffs und des Zinkoxidpulvers und/oder Manganoxidpulvers hergestellt wird, diese Mischung zusammen mit dem für die thermoplastische Kunststoffolie bestimmten Kunststoff coextrudiert wird und die Coexfolie auf ein Metallblech kaschiert wird.

Anstelle einer Haftvermittlerschicht kann auch ein wäßriger oder ein lösemittelhaltiger Klebstoff die Haftung zwischen der Kunststoffolie und dem Metallblech bewirken. Die Klebstoffe werden vorzugsweise durch Auftragen aus Lösungen oder Dispersionen in Wasser oder organischen Lösungsmitteln aufgebracht. Die Lösungen oder die Dispersionen haben in der Regel einen Klebstoffgehalt von etwa 5 bis 60 Gew.-%. Die aufgebrachte Klebstoffmenge beträgt in der Regel etwa 1 bis 10 g/m²-Fläche. Besonders geeignete Klebstoffe sind die synthetischen Klebstoffe, bestehend aus thermoplastischen Harzen, wie Celluloseester, Celluloseether, Alkyl- oder Acrylester, Polyamide, Polyurethane und Polyester, aus wärmehärtenden Harzen, wie Epoxyharzen, Harnstoff/Formaldehydharzen, Phenol/Formaldehydharzen und Melamin-Formaldehydharzen oder aus synthetischen Kautschuken. Es ist möglich, daß das Zinkoxidpulver und/oder Manganoxidpulver auch in die zwischen thermoplastischer Kunststoffolie und Metall angeordneten Klebeschicht eingearbeitet wird. Dabei wird so vorgegangen, daß das oxidische Pulver mit dem wäßrigen oder lösemittelhaltigen Klebstoff vermischt wird, der erhaltene Klebstoff auf ein erhitztes Metallblech appliziert wird und eine thermoplastische Kunstoffolie auf das Metallblech kaschiert wird.

Als Metallbleche der erfindungsgemäßen Metall-Kunststoffolie-Verbunden kommen alle eisen- und zinnhaltigen Bleche in Frage, z.B. Metalle aus Schwarzblech, Weißblech, Eisen und aus entsprechenden Legierungen, die ggf. mit einer Passivierungsschicht versehen sind. Geeignete Metallisierungsverfahren sind die Elektroplattierung, das Besputtern und die Vakuumbedampfung. Um eine gute Haftung der Metallschicht auf der zu metallisierenden Fläche zu erreichen, wird diese Fläche vorher einer Korona-Behandlung ausgesetzt. Gemäß der vorliegenden Erfindung kommen Metallbleche in Frage, die eine Stärke von mindestens 0,08 mm aufweisen. Bevorzugt sind Metallbleche mit einer Stärke von 0,08 bis 1 mm. Je nach Verwendungszweck sind auch Stärken von mehr als 1 mm geeignet.

Die vorliegende Erfindung betrifft auch Verfahren zur Herstellung der zuvor beschriebenen Metall-Kunststoffolie-Verbunde, die dadurch gekennzeichnet sind, daß ein thermoplastischer Kunststoff mit einem Haftvermittler coextrudiert wird und die erhaltene Folie auf ein Metallblech kaschiert wird, wobei das Zinkoxidpulver und/oder das Manganoxidpulver in die thermoplastische Kunststoffolie und/oder in die Haftvermittlerschicht eingearbeitet worden ist, oder eine thermoplastische Kunststoffolie mit Hilfe eines lösemittelhaltigen oder wäßrigen Klebstoffes auf ein Metallblech kaschiert wird, wobei das Zinkoxidpulver und/oder das Manganoxidpulver in die thermoplastische Kunststoffolie und/oder in die Klebstoffschicht eingearbeitet worden ist.

Es ist daher möglich, den zur Herstellung der Kunststoffolien vorgesehenen thermoplastischen Kunststoff mit dem Zinkoxid- und/oder Manganoxidpulver zu vermischen und diese Mischung mit einem Haftvermittler zu coextrudieren, wobei anschließend die coextrudierte Folie auf das Metallblech kaschiert wird. Selbstverständlich kann das oxidische Pulver aber auch mit dem Haftvermittlerkunststoff vermischt werden und diese Haftvermittlerzusammensetzung mit dem thermoplastischen Kunststoff, der ggf. auch Zinkoxid- und/oder Manganoxidpulver enthalten kann, coextrudiert werden. Bei Verwendung eines Haftvermittlers, der mit dem thermoplastischen Kunststoff coextrudiert wird, wird dann das Metallblech mit der coextrudierten Folie derart bedeckt, daß die Haftvermittlerschicht der coextrudierten Folie die Metalloberfläche berührt. Durch Anwendung von Druck und Wärme wird entweder mittels einer temperierbaren Presse oder im Walzenspalt eines Walzwerkes oder Kalanders mittels termperierbarer Walzen der Metall-Haftvermittler-Kunststoffolie-Verbund hergestellt. Der Druck und die Temperatur sind dabei so zu wählen, daß einerseits der Haftvermittler eine feste und stabile Verbindung mit der Metallfolie bzw. dem Metallblech eingeht und daß andererseits die thermoplastische Kunstoffolie nicht aufschmilzt.

Die Herstellung eines Metall-Kunststoffolie-Verbundes mittels eines lösemittelhaltigen oder wäßrigen Klebstoffs ist ebenfalls ein wohlbekanntes Verfahren. Dabei wird im allgemeinen so verfahren, daß der Kleber auf ein erhitztes Metallblech appliziert wird und dann die Kunststoffolie auf das erhitzte Blech aufkaschiert wird. In diesem Fall kann eine Mischung aus thermoplastischem Kunststoff und dem Zinkoxid- und/oder Manganoxidpulver extrudiert werden und die erhaltene Folie mit Hilfe eines wäßrigen oder lösemittelhaltigen Klebstoffs, welcher ebenfalls Zinkoxid- und/oder Manganoxidpulver enthalten kann, auf das Metallblech geklebt werden. Daneben ist es aber auch möglich, daß das oxidische Pulver nur in die Klebstoffschicht eingearbeitet wird.

Die Beschichtung des Metallblechs bzw. die thermoplastische Verbundfolie weist im allgemeinen eine Gesamttrockenfilmstärke von weniger als 500 µm, bevorzugt 10 bis 200 µm auf. Die Stärke der Haftvermittlerschicht bzw. der Klebeschicht liegt dabei zwischen 0,5 und 100 µm. Die Stärke der Deckschicht ergibt sich entsprechend zu Werten zwischen 10 und 499,5 µm.

Gemäß der vorliegenden Erfindung sind unter den Metall-Kunststoffolie-Verbunden auch Laminate zu verstehen, bei denen das Metallblech beidseitig mit einer Kunstoffolie beschichtet ist.

Die Erfindung betrifft ebenfalls die nach dem erfindungsgemäßen Verfahren hergestellten Metall-Kunststoffolie-Verbunde. Diese werden beispielsweise zu Konservendosen, Glaserverschlüssen, Kronkorken- oder zu Ventiltellerträgern für Aerosoldosen gestanzt.

Die erfindungsgemäßen Metall-Kunststoffolie-Verbunde werden zur Herstellung von Verpackungsbehältern eingesetzt, und zwar insbesondere zur Herstellung von Böden bzw. Deckeln von Dosen, Ventiltellern von Aerosoldosen sowie von Verschlüssen. Die Herstellung der Verschlußteile erfolgt nach den üblichen Methoden (vgl. beispielsweise VR-INTERPACK 1969, Seiten 600 - 606: W. Panknin, A. Breuer, M. Sodeik, "Abstreckziehen als Verfahren zum Herstellen von Dosen aus Weißblech"; SHEET METAL INDUSTRIES, August 1976: W. Panknin, Ch. Schneider, M. Sodeik, "Plastic Deformation of Tinplate in Can Manufacturing"; Verpackungs-Rundschau, Heft 4/1971, Seiten 450 - 458: M. Sodeik, I. Siewert, "Die nahtlose Dose aus Weißblech"; Verpackungs-Rundschau, Heft 11/1975, Seiten 1402 bis 1407: M. Sodeik, K. Haaß, I. Siewert, "Herstellen von Dosen aus Weißblech durch Tiefziehen"; Arbeitsmappe für den Verpackungspraktiker, Metalle, Teil II, Gruppe 2, Weißblech, Lfd.-Nr. 220.042 bis 220.048 in neue Verpackung 12/87, Seite B 244 bis B 246 und neue Verpackung 1/88, Seiten B 247 bis B 250).

Bezüglich näherer Einzelheiten wird daher auf die Literatur verwiesen.

Bei Konservendosen, die aus den erfindungsgemäßen Laminaten gestanzt und nach Befüllung sterilisiert werden, treten keinerlei Korrosions- bzw. Marmorierungserscheinungen an den Dosen auf. Dies ist vermutlich darauf zurückzuführen, daß die verwendeten Zinkoxid- und Manganoxidpulver durch Sulfidbildung in farblose Zinksulfide bzw. Mangansulfide überführt werden. Die Dunkelfärbung bzw. die Marmorierungserscheinungen, die ohne Zusatz von Zinkoxidpulver und Manganoxidpulver auftreten, sind vermutlich auf Eisensulfidbildung und Zinnsulfidbildung zurückzuführen. Durch Einbau der oxidischen Pulver in die Folie und/oder in den Haftvermittler oder in die Klebstoffschicht wird die Eisen- bzw. Zinnsulfidbildung an der Konservendose wirkungsvoll verhindert.

Nachfolgend wird die Erfindung an Hand von Ausführungsbeispielen näher erläutert:

### Beispiel 1

Polypropylen-Granulat (Novolen 3225 MCX der BASF AG) wird mit 0,1, 0,5, 1, 2, 4, 6 und 8 Gew.-% ZnO-Pulver (Zinkoxid aktiv der Fa. Bayer), bezogen auf das Gesamtgewicht von Polypropylen und ZnO-Pulver, vermischt (Vorsicht: Explosionsgefahr) und bei ca. 180°C Walzentemperatur (Zweiwalzengerät) aufgeschmolzen und homogenisiert. Die Mischungen werden zu Folien verpreßt und mittels eines 2K-Polyurethan-Klebers oder eines Haftvermittlers (Haftvermittler auf Basis von mit Maleinsäureanhydrid gepfropftem Polypropylen) auf Weißblech auflaminiert und zu Konservendosen oder Deckeln gestanzt.

Die Dicke der Folien wird variiert und beträgt 30, 50, 100, 200 µm.

Es werden mehrere Konservendosen bzw. Deckel, die ein- oder beidseitig mit Folie beschichtet sind, hergestellt und mit verschiedenen Lösungen, wie z.B. NaCl-, Essigsäure-, NaCl- und Milchsäure-Lösung, Tierfutter (Shappi, Sheba), Tomatenmark u.ä. gefüllt und verschlossen. Die Konservendosen werden bei 121°C 30 Minuten lang oder bei 130°C 1 Stunde lang sterilisiert, geöffnet und anschließend wird auf Marmorierung (Schwarzfärbung des Materials) bzw. werden eventuell auftretende Korrosionserscheinungen untersucht.

Ergebnis: Bei allen Versuchen wird keine Marmorierung bzw. werden keine Korrosionserscheinungen festgestellt, während bei den entsprechenden Versuchen ohne Zinkoxidpulver deutliche Marmorierungserscheinungen an der Dose erkennbar sind.

### Beispiel 2

Es wird verfahren wie in Beispiel 1 mit dem Unterschied, daß das Zinkoxidpulver nicht mit dem Polypropylen-Granulat vermischt wird, sondern mit Hilfe eines automatischen Pulverdosierers der Polypropylenschmelze während der Extrusion zudosiert wird. Bei dieser Verfahrensweise ist eine Explosion ausgeschlossen. Die Ergebnisse bezüglich Marmorierung bzw. Korrosionserscheinungen entsprechen den Ergebnissen aus Beispiel 1.

### Beispiel 3

Es wird verfahren wie in Beispiel 1 mit dem Unterschied, daß an Stelle des Polypropylens Novolen 3225 MCX der BASF AG eine 1 : 1 Mischung aus dem Polypropylen Novolen 1100 und Novolen 1125 (beide von der Firma BASF AG) verwendet wird.

Die Ergebnisse hinsichtlich Marmorierung bzw. Korrosion entsprechen den Ergebnissen aus Beispiel 1 und 2.

### Beispiel 4

Es werden Monofolien und aus mehreren Schichten bestehende Verbundfolien hergestellt, wobei als Trägermaterial das Polyethylen Lupolen® (BASF AG), das Polyamid Ultramid® (BASF AG), das Polybutylenterephthalat Ultradur® (BASF AG) sowie 1 : 1 Mischungen der jeweiligen Kunststoffe eingesetzt werden. Als Haftvermittler wird das unter der Handelsbezeichnung Lucalen® (BASF AG) bekannte Material zusammen mit dem Trägermaterial coextruiert.

Zinkoxidpulver (erhältlich uner der Bezeichnung "Zinkoxid Harzsiegel NT/S" der Firma Heubach) wird in Anteilen von 0,1, 0,5, 1,0, 2,0, 4,0, 6,0 und 8 Gew.-%, bezogen auf das Gesamtgewicht von Trägermaterial und Zinkoxidpulver, sowohl in die Trägerschicht als auch in die Haftvermittler eingearbeitet. Die auf Weißblech auflaminierten Folien werden jeweils zu Konservendosen gestanzt. Die Konservendosen werden mit dem in Beispiel 1 genannten Lösungen gefüllt und verschlossen. Die Dosen werden bei 121°C 30 Minuten lang oder bei 130°C 1 Stunde lang sterilisiert, geöffnet und auf Marmorierung bzw. Korrosionserscheinungen untersucht.

Ergebnis: Bei allen Versuchen wird keine Marmorierung bzw. werden keine Korrosionserscheinungen festgestellt, während bei entsprechenden Versuchen ohne ZnO-Pulver deutliche Marmorierungserscheinungen feststellbar sind.

## Patentansprüche

1. Anorganische Oxide enthaltender Metall-Kunststoffolie-Verbund, dadurch gekennzeichnet, daß 0,1 bis 8 Gew.-%, vorzugsweise 0,5 bis 8 Gew.-%, bezogen auf das Gesamtgewicht des thermoplastischen Kunststoffs der Kunststoffolie und der anorganischen Oxide, eines Pulvers, bestehend aus Zinkoxid und/oder Manganoxid, in der Kunststoffolie und/oder in der zwischen dem Metall und der Kunststoffolie angeordneten Haftvermittlerschicht bzw. Klebeschicht eingearbeitet sind und das Metall des Verbundes eine Stärke von mindestens 0,08 mm aufweist.

2. Metall-Kunststoffolie-Verbund nach Anspruch 1, dadurch gekennzeichnet, daß 2 bis 4 Gew.-% Zinkoxid, bezogen auf das Gesamtgewicht des thermoplastischen Kunststoffs der Kunststoffolie und der anorganischen Oxide, in der Kunststoffolie eingearbeitet sind.

3. Metall-Kunststoffolie-Verbund nach Anspruch 1 oder 2, dadurch gekennzeichnet, daß die mittlere Teilchengröße des Zinkoxids und des Manganoxids im Bereich von 0,1 bis 10 µm liegt.

4. Metall-Kunststoffolie-Verbund nach Anspruch 1 bis 3, dadurch gekennzeichnet, daß die Kunststoffolie durch Extrusion von statistischem Polypropylen-Copolymerisat, vorzugsweise durch Extrusion von Polypropylencopolymerisat aus 1 bis 4 Gew.-% Ethylen und 96 bis 99 Gew.-% Propylen, bezogen auf das Gesamtgewicht der Monomerenzusammensetzung, erhalten wird.

5. Verfahren zur Herstellung des Metall-Kunststoffolie-Verbundes nach Anspruch 1 bis 4, dadurch gekennzeichnet, daß ein thermoplastischer Kunststoff mit einem Haftvermittler coextrudiert wird und die hergestellte Folie auf ein Metallblech kaschiert wird, wobei das Zinkoxidpulver und/oder das Manganoxidpulver in die thermoplastische Kunststoffolie und/oder in die Haftvermittlerschicht eingearbeitet worden ist oder eine thermoplastische Kunststoffolie mit Hilfe eines lösemittelhaltigen oder wäßrigen Klebstoffes auf ein Metallblech kaschiert wird, wobei das Zinkoxidpulver und/oder das Manganoxidpulver in die thermoplastische Kunststoffolie und/oder in die Klebstoffschicht eingearbeitet worden ist.

6. Verwendung des Metall-Kunststoffolie-Verbundes nach einem oder nach mehreren der Ansprüche 1 bis 4 zur Herstellung von Konservendosen.

## Claims

1. Metal/plastic film composite containing inorganic oxides, characterized in that 0.1 to 8% by weight, preferably 0.5 to 8% by weight, relative to the total weight of the thermoplastic of the plastic film and of the inorganic oxides, of a powder consisting of zinc oxide and/or manganese oxide is incorporated in the plastic film and/or in the adhesion promoter layer or adhesive layer located between the metal and the plastic film, and the metal of the composite has a thickness of at least 0.08 mm.

2. Metal/plastic film composite according to Claim 1, characterized in that 2 to 4% by weight of zinc oxide, relative to the total weight of the thermoplastic of the plastic film and of the inorganic oxides, is incorporated in the plastic film.

3. Metal/plastic film composite according to Claim 1 or 2, characterized in that the mean particle size of the zinc oxide and of the manganese oxide is in the range from 0.1 to 10 µm.

4. Metal/plastic film composite according to Claims 1 to 3, characterized in that the plastic film is obtained by extrusion of random polypropylene copolymer, preferably by extrusion of polypropylene copolymer consisting of 1 to 4% by weight of ethylene and 96 to 99% by weight of propylene, relative to the total weight of the monomer composition.

5. Process for producing the metal/plastic film composite according to Claims 1 to 4, characterized in that a thermoplastic is co-extruded with an adhesion promoter and the film produced is laminated to a metal sheet, the zinc oxide powder and/or the manganese oxide powder having been incorporated into the thermoplastic film and/or into the adhesion promoter layer, or a thermoplastic film is laminated by means of a solvent-containing or aqueous adhesive to a metal sheet, the zinc oxide powder and/or the manganese oxide powder having been incorporated into the thermoplastic film and/or into the adhesive layer.

6. Use of the metal/plastic film composite according to one or more of Claims 1 to 4 for the manufacture of cans.

## Revendications

1. Matériau composite constitué d'un film de matière plastique et de métal contenant des oxydes inorganiques, caractérisé en ce que de 0,1 à 8 % en poids, de préférence de 0,5 à 8 % en poids, par rapport au poids total de la matière plastique thermoplastique du film de matière plastique et des oxydes inorganiques, d'une poudre, se composant d'oxyde de zinc et/ou d'oxyde de manganèse sont incorporés dans le film de matière plastique et/ou dans la couche de promoteur d'adhésion, respectivement la couche adhésive disposée entre le métal et le film de matière plastique, et en ce que le métal du matériau composite présente une épaisseur d'au moins 0,08 mm.

2. Matériau composite constitué d'un film de matière plastique et de métal selon la revendication 1, caractérisé en ce que de 2 à 4 % en poids d'oxyde de zinc, par rapport au poids total de la matière plastique thermoplastique du film de matière plastique et des oxydes inorganiques sont incorporés dans le film de matière plastique.

3. Matériau composite constitué d'un film de matière plastique et de métal selon la revendication 1 ou 2, caractérisé en ce que la grandeur moyenne de particules de l'oxyde de zinc et de l'oxyde de manganèse se situe dans le domaine de 0,1 à 10 µm.

4. Matériau composite constitué d'un film de matière plastique et de métal selon la revendication 1 à 3, caractérisé en ce que le film de matière plastique est obtenu par extrusion de copolymérisat de polypropylène statistique, de préférence par extrusion de copolymérisat de polypropylène de 1 à 4 % en poids d'éthylène et de 96 à 99 % en poids de propylène, par rapport au poids total de la composition de monomère.

5. Procédé de production d'un matériau composite constitué d'un film de matière plastique et de métal selon la revendication 1 à 4, caractérisé en ce que l'on procède à la co-extrusion d'une matière plastique thermoplastique avec un promoteur d'adhésion et au contre-collage du film fabriqué sur une tôle métallique, la poudre d'oxyde de zinc et/ou la poudre d'oxyde de manganèse étant incorporées dans le film de matière plastique thermoplastique et/ou dans la couche de promoteur d'adhésion ou étant contre-collé sur une tôle métallique à l'aide d'un adhésif contenant des solvants ou aqueux, la poudre d'oxyde de zinc et/ou la poudre d'oxyde de manganèse étant incorporées dans le film de matière plastique thermoplastique et/ou dans la couche adhésive.

6. Utilisation du matériau composite constitué d'un film de matière plastique et de métal selon l'une ou plusieurs des revendications 1 à 4, en vue de la production de boîtes de conserve.
